**Europäisches Patentamt**

**European Patent Office**

**Office européen des brevets**

(11) Numéro de publication : **0 014 148 B1**

# (12) FASCICULE DE BREVET EUROPÉEN

(45) Date de publication du fascicule du brevet :
07.04.82

(51) Int. Cl.³ : **B 66 C 1/36, F 16 B 45/02**

(21) Numéro de dépôt : **80400096.6**

(22) Date de dépôt : **22.01.80**

(54) **Crochet de sécurité.**

(30) Priorité : 25.01.79 FR 7902691

(43) Date de publication de la demande :
06.08.80 (Bulletin 80/16)

(45) Mention de la délivrance du brevet :
07.04.82 Bulletin 82/14

(84) Etats contractants désignés :
DE GB IT SE

(56) Documents cités :
DE - C - 137 444
FR - A - 1 128 916
FR - A - 2 177 828
FR - A - 2 204 563
US - A - 1 386 894
US - A - 1 595 264
US - A - 3 268 967
US - A - 3 776 390
US - A - 4 007 957

(73) Titulaire : **STAS SOCIETE TECHNIQUE D'ACCESSOI-RES SPECIALISES Société anonyme dite:**
**77, rue Henri-Brisson**
**F-78500 Sartrouville (FR)**

(72) Inventeur : **Archer, Jean François**
**10, avenue Georges-Clémenceau**
**F-78670 Villennes (FR)**

(74) Mandataire : **Boivin, Claude**
**9, rue Edouard-Charton**
**F-78000 Versailles (FR)**

EP 0 014 148 B1

Imprimerie Jouve, 18, rue St-Denis, 75001 Paris, France

Crochet de sécurité

On connaît des crochets de sécurité qui comportent un linguet de fermeture articulé sur le corps du crochet et muni d'un trou de raccordement à son extrémité extérieure. Lorsqu'on soulève une charge avec un crochet de ce genre, elle a pour effet de faire pivoter le linguet et de l'appliquer sur le bec du crochet, ce qui empêche la charge de se dégager du crochet ; un verrou muni d'un ressort de rappel permet d'immobiliser le linguet dans sa position de fermeture. De tels crochets sont décrits notamment dans le brevet FR-A-1 574 978.

Mais ces crochets de sécurité ont une forme spéciale ; en particulier, leur bec est plus court que celui d'un crochet normal de sorte que, si le linguet de fermeture n'est pas en position de sécurité, la charge peut facilement glisser et s'échapper du crochet. Lorsqu'on engage la charge sur le crochet, il se peut que, par suite de frottement la charge ne vienne pas au fond de l'ouverture du crochet et reste au voisinage de l'extrémité du bec. Lorsqu'on soulève ensuite le crochet avec sa charge, il prend une position dans laquelle le trou de raccordement et le point d'action de la charge sur le crochet se trouvent à la même verticale ; la charge reste ainsi au voisinage de l'extrémité du bec, ce qui est dangereux, en particulier si le linguet n'est pas en position de fermeture. Même si le linguet est dans cette position, il se peut que le ressort de rappel du verrou soit cassé et que ce verrou n'empêche pas le linguet de libérer l'ouverture du crochet ; or, rien ne signale à l'utilisateur que le verrou est en état de marche et bloque réellement le linguet dans sa position de fermeture.

On connaît également, notamment par le brevet US-A-4 007 957 un crochet muni d'un verrou qui comporte deux becs opposés et est monté pivotant à la partie supérieure du crochet, autour d'un axe situé dans le plan de ce crochet et horizontal dans la position d'utilisation normale de ce dernier, de façon à pouvoir occuper une position de sécurité dans laquelle l'un de ses becs se trouve à proximité du bec du crochet. Mais rien ne permet de bloquer le verrou dans sa position de sécurité. Si le verrou pivote intempestivement, la charge peut s'échapper du crochet ; celui-ci ne constitue pas véritablement un crochet de sécurité.

La présente invention a pour objet un crochet qui assure une sécurité totale et remédie aux divers inconvénients signalés précédemment des crochets de sécurité connus.

Ce crochet qui est du type mentionné en dernier lieu ci-dessus, est caractérisé en ce qu'il comporte des moyens pour bloquer le verrou dans sa position de sécurité, ces moyens comprenant un linguet monté pivotant sur le crochet autour d'un axe perpendiculaire au plan de celui-ci et propre à embrasser le second bec du verrou pour empêcher ce dernier de pivoter, et des moyens élastiques agissant sur le linguet et tendant à le maintenir dans une position dans laquelle il empêche le verrou de pivoter.

On a décrit ci-après, à titre d'exemple non limitatif, un mode de réalisation du crochet selon l'invention avec référence au dessin annexé dans lequel :

La figure 1 est une vue en élévation du crochet ;

La figure 2 en est une vue latérale, suivant la flèche F de la figure 1 ;

La figure 3 est une vue en perspective du linguet d'immobilisation du verrou ;

La figure 4 en est une vue latérale partielle montrant le verrou en position escamotée.

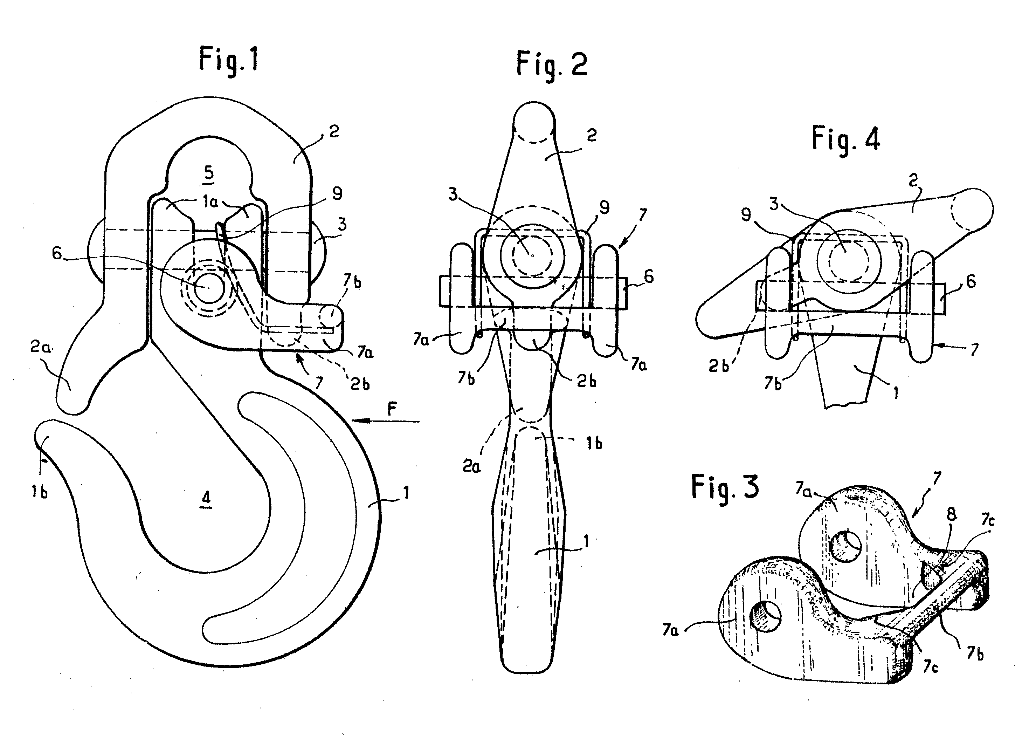

Tel qu'il est représenté au dessin, le crochet 1 présente à son extrémité supérieure, une partie 1a en forme de chape à laquelle un verrou 2 est relié par un axe 3 ; cet axe est situé dans le plan du crochet et horizontal dans la position d'utilisation normale de ce dernier, comme on le voit à la figure 1. Le verrou 2 comporte un bec 2a qui, lorsque ce verrou est dans le plan du crochet, se trouve à proximité du bec 1b de ce crochet en obturant pratiquement l'ouverture 4 dudit crochet. Le bord intérieur du verrou 2 et les bords extérieurs des oreilles de la chape 1a sont conformés de manière à délimiter une ouverture 5 sensiblement circulaire pour le passage d'une élingue.

L'ouverture de la chape 1a s'étend en dessous de l'axe 3 et est traversée à sa partie inférieure par un axe 6, perpendiculaire au plan du crochet ; cet axe est maintenu par l'axe 3 et un linguet de verrouillage 7 est monté pivotant sur lui.

Comme on le voit plus particulièrement à la figure 3, le linguet 7 est formé de deux oreilles 7a réunies l'une à l'autre par une traverse 7b délimitant une ouverture 8. Le verrou 2 comporte, sur sa face latérale opposée à celle munie du bec 2a, un bec 2b propre à s'engager dans l'ouverture 8. Un ressort 9 dont les extrémités sont enroulées sur l'axe 6 et qui passe sur l'axe 3, est terminé par des branches engagées sour la traverse 7b. Ce ressort tend ainsi à faire pivoter le linguet 7 vers le haut, jusqu'à ce qu'il soit en butée contre le verrou 2, position dans laquelle le bec 2b de ce verrou est engagé dans l'ouverture 8, ce qui empêche le verrou de pivoter autour de l'axe 3.

Le bec 2b du verrou 2 est arrondi de sorte que sa paroi latérale forme rampe. Lorsque le verrou est dégagé du linguet 7 (fig. 4) et qu'une traction est exercée sur le crochet et sur le verrou, le bec 2b de ce dernier repousse l'une ou l'autre des parties 7c du linguet 7 adjacentes à la traverse 7b, de sorte que le linguet pivote contre l'action du ressort 9 pour permettre le passage du bec 2b du verrou 2.

Pour utiliser le crochet qui vient d'être décrit, on presse sur le linguet 7 de façon à dégager le bec 2b du verrou 2 et on amène le verrou en position inactive (fig. 4). En relâchant la pression sur le linguet 7 le verrou 2 s'immobilise dans une position faisant un certain angle avec le plan du crochet comme représenté selon la figure 4. Il est alors possible d'engager la charge, par exemple une boucle d'élingue, sur le crochet 1.

Dès que l'on exerce une tension sur le crochet 1 et sur le verrou 2, ce dernier revient dans le même plan que le crochet 1 car le bec 2b repousse la partie 7c du linguet 7 et vient s'engager dans l'ouverture 8 ; le crochet se trouve alors en position verrouillée.

Lorsqu'on engage le bec 1b du crochet dans la boucle de l'élingue et qu'on soulève ce crochet, l'élingue glisse sur le bec 1b et vient se placer dans le fond de l'ouverture du crochet ; le crochet 1 occupe sa position normale sans être déporté par rapport à la verticale. La position du linguet 7 montre que le crochet est en position de sécurité et que l'élingue peut se dégager.

Le contrôle de l'engagement du bec 2b dans l'ouverture 8 est facile à visualiser.

Si l'utilisateur a mal engagé l'élingue et que celle-ci se trouve en équilibre sur le bec 1b, le bec 2a du verrou 2 chasse cette élingue lorsque le verrou vient en position active, ce qui oblige l'utilisateur à remettre l'élingue correctement en place.

Si un effort est exercé en latéral sur le crochet alors que celui-ci est par exemple coincé sous une charge, seul le linguet peut casser. On peut néanmoins continuer à utiliser le crochet comme un crochet normal. Même dans ce cas, les deux becs 2a et 1b sont maintenus à proximité l'un de l'autre sous l'effet du poids de la charge, ce qui assure une certaine sécurité.

Lorsque le ressort 9 est cassé, le linguet 7 pend vers le bas, ce qui prévient l'utilisateur.

Enfin, le crochet est robuste et sa sécurité fonctionne correctement, même en présence de poussières ou de saletés diverses ; son bec 1b a la forme d'un bec de crochet usuel, comme on le voit à la figure 1.

Il va de soi que la présente invention ne doit pas être considérée comme limitée au mode de réalisation décrit et représenté, mais en couvre, au contraire, toutes les variantes.

## Revendications

1. Crochet de sécurité muni d'un verrou (2) qui comporte deux becs (2a, 2b) opposés et est monté pivotant à la partie supérieure du crochet (1), autour d'un axe (3) situé dans le plan de ce crochet et horizontal dans la position d'utilisation normale de ce dernier, de façon à pouvoir occuper une position de sécurité dans laquelle le premier de ses becs se trouve à proximité du bec du crochet et des moyens pour bloquer ce verrou dans sa position de sécurité, caractérisé en ce que lesdits moyens comprennent un linguet (7) monté pivotant sur le crochet (1) autour d'un axe (6) perpendiculaire au plan de celui-ci et propre à embrasser le second bec (2b) du verrou (2) pou empêcher ce dernier de pivoter, et des moyens élastiques (9) agissant sur le linguet (7) et tendant à le maintenir dans une position dans laquelle il empêche le verrou de pivoter.

2. Crochet selon la revendication 1 dont l'extrémité supérieure est en forme de chape (1a), caractérisé en ce que l'axe de pivotement (6) du linguet (7) est disposé dans le fond de cette chape (1a).

3. Crochet selon la revendication 1 ou 2, caractérisé en ce que les moyens élastiques (9) sont constitués par un ressort qui prend appui sur l'axe de pivotement (3) du verrou (2) et qui est terminé par des branches enroulées sur l'axe de pivotement (6) du linguet (7) et prenant appui sous le linguet.

4. Crochet selon l'une des revendications 1 à 3 dont l'extrémité supérieure est en forme de chape (1a), caractérisé en ce que le bord inférieur du verrou (2) et les bords extérieurs des oreilles de la chape (1a) sont conformés de façon à délimiter une ouverture (5) sensiblement circulaire.

5. Crochet selon l'une quelconque des revendications précédentes, caractérisé en ce que le linguet (7) comporte deux oreilles (7a) qui sont montées pivotantes sur le crochet et réunies l'une à l'autre par une traverse (7b) délimitant une ouverture (8) dans laquelle le second bec (2b) du verrou (2) peut s'engager.

6. Crochet selon la revendication 5, caractérisé en ce que le second bec (2b) du verrou (2) est arrondi et forme une rampe propre à repousser la traverse (7b) du linguet (7) et à faire pivoter ce dernier contre l'action des moyens élastiques (9) qui agissent sur lui.

## Claims

1. Safety hook provided with a shackle (2) which comprises two, opposed, tips (2a, 2b) and is pivotally mounted on the upper part of the hook (1), on a pin (3) disposed in the plane of the hook and horizontally in the normal use position of the latter, so that is can assume a safety configuration in which the first of its tips lies adjacent to the tip of the hook and means for locking the shackle in the safety configuration, characterized in this that the said means comprises a catch (7) pivotally mounted on the hook (1) on a pin (6) perpendicular to the plane of the latter and adapted to engage the second tip (2b) of the shackle (2) in order to prevent the latter from pivoting, and resilient means (9) acting on the catch (7) and tending to maintain it in a position in which it prevents the shackle from pivoting.

2. Hook according to claim 1 of which the upper end is in the form of a clevis (1a), characterized in this that the pivot pin (6) of the catch (7) is disposed in the bottom of the clevis (1a).

3. Hook according to claim 1 or 2, characterized in this that the resilient means (9) are constituted by a spring which abuts the pivot pin (3) of the shackle (2) and which is terminated by branches engaged around the pivot pin (6) of the catch (7) and making contact beneath the catch.

4. Hook according to one of claims 1 to 3 of which the upper end of the hook is in the form of a clevis (1a), characterized in this that the lower edge of the shackle (2) and the outer edges of the ears of the clevis (1a) are shaped in such a manner as to define an opening (5) which is substantially circular.

5. Hook according to any one of preceding claims, characterized in this that the catch (7) comprises two ears (7a) which are pivotally mounted on the hook and connected to one another by a cross-piece (7b) defining an opening (8) into which the second tip (2b) of the shackle (2) can engage itself.

6. Hook according to claim 5, characterized in this that the second tip (2b) of the shackle (2) is rounded and forms a wedge adapted to reject the cross-piece (7b) of the catch (7) and cause the latter to pivot against the action of the resilient means (9) which act thereon.

**Ansprüche**

1. Sicherheitshaken mit einem Riegel (2), der zwei einander gegenüberliegende Ansätze (2a, 2b) aufweist und am oberen Teil des Hakens (1) um einen Achszapfen (3) schwenkbar gelagert ist, der in der Ebene des Hakens und, bezogen auf die Ausrichtung des Hakens bei seiner bestimmungsgemäßen Benutzung, horizontal angeordnet ist, wobei der Riegel eine Sicherungslage einnehmen kann, in der sich ein erster seiner beiden Ansätze in der Nähe des offenen Hakenendes befindet, und mit Mitteln zum Blockieren des Riegels in seiner Sicherungslage, dadurch gekennzeichnet, daß die Mittel zum Blockieren des Riegels einen Sperrbügel (7), der an dem Haken (1) um einen senkrecht zur Ebene des Hakens ausgerichteten Achszapfen (6) schwenkbar gelagert und so ausgebildet ist, daß er den zweiten der beiden Ansätze (2b) des Riegels (2) so umgreifen kann, daß der Riegel nicht mehr verschwenkbar ist, und ein elastisches Element (9) umfassen, das den Sperrbügel in der Weise beaufschlagt, daß dieser in einer Lage gehalten wird, in der er den Riegel gegen ein Verschwenken blockiert.

2. Haken nach Anspruch 1 mit einem als Lagergabel (1a) ausgebildeten Kopf, dadurch gekennzeichnet, daß der Achszapfen (6) des Sperrbügels (7) auf der Sohle der Lagergabel (1a) angeordnet ist.

3. Haken nach einem der Ansprüche 1 oder 2, dadurch gekennzeichnet, daß das elastische Element (9) eine Feder ist, die auf dem Achszapfen (3) des Riegels (2) abgestützt ist und in Schenkeln ausläuft, die um den Achszapfen (6) des Sperrbügels herumgelegt und auf dem Sperrbügel abgestützt sind.

4. Haken nach einem der Ansprüche 1 bis 3 mit einem als Lagergabel (1a) ausgebildeten Kopf, dadurch gekennzeichnet, daß die Unterseite des Riegels (2) und die Außenseiten der Schenkel der Lagergabel (1a) so ausgebildet sind, daß sie gemeinsam eine zumindest im wesentlichen kreisrunde Öffnung (5) umgrenzen.

5. Haken nach einem der vorhergehenden Ansprüche, dadurch gekennzeichnet, daß der Sperrbügel (7) zwei Schenkel (7a) aufweist, die schwenkbar am Haken gehaltert und so durch eine Querstange (7b) miteinander verbunden sind, daß die Schenkel und die Querstangen gemeinsam eine Öffnung (8) umgrenzen, in die der zweite Ansatz (2b) des Riegels (2) eingreifen kann.

6. Haken nach Anspruch 5, dadurch gekennzeichnet, daß der zweite Ansatz (2b) des Riegels (2) abgerundet und mit einer Schrägfläche ausgebildet ist, die die Querstange (7b) des Sperrbügels (7) gegen die Beaufschlagung durch die elastischen Mittel (9) verschwenkend auslenken kann.

Fig.1

Fig. 2

Fig. 4

Fig. 3

0014148